Europäisches Patentamt

(19) European Patent Office

Office européen des brevets

(11) Numéro de publication: **0 120 764**

**A1**

(12) # DEMANDE DE BREVET EUROPEEN

(21) Numéro de dépôt: **84400516.5**

(51) Int. Cl.³: **G 02 B 7/26**

(22) Date de dépôt: **14.03.84**

(30) Priorité: **25.03.83 FR 8304916**

(43) Date de publication de la demande:
**03.10.84 Bulletin 84/40**

(84) Etats contractants désignés:
**DE GB IT**

(71) Demandeur: **SOURIAU & Cie (S.A.)**
**9/13, rue du Général Galliéni**
**F-92103 Boulogne-Billancourt(FR)**

(72) Inventeur: **Gelly, Gérard**
**1, Square Grunebaum Ballin**
**F-92350 Le Plessis Robinson(FR)**

(72) Inventeur: **Crosnier, Jean-Jacques**
**4, rue Ledru Rollin**
**F-92260 Fontenay aux Roses(FR)**

(72) Inventeur: **Ossona de Mendez, Michel**
**Chemin de l'Etoile du Mesnil**
**F-91310 Monthlery(FR)**

(74) Mandataire: **Flavenot, Bernard**
**Société S.E.D.I.C. 40 rue Victor Basch**
**F-92120 Montrouge(FR)**

(54) Séparateur de faisceaux d'ondes optiques.

(57) La présente invention concerne les séparateurs de faisceaux d'ondes optiques.

Le séparateur d'ondes optiques se caractérise par le fait qu'il comporte :
— un premier guide d'ondes optiques 21, réalisé en un premier matériau d'indice optique "n1",
— un second guide d'ondes optiques 26, réalisé en un second matériau d'indice optique "n2", ayant une valeur égale à "n1" et le second guide d'ondes ayant une face d'entrée située sur au moins une partie 28 de la surface latérale du premier guide d'ondes. Ce séparateur de faisceaux d'ondes optiques trouve une application très particulièrement avantageuse, par exemple, dans les techniques télédiffusion, télécommunication par câbles de fibres optiques.

FIG.2

EP 0 120 764 A1

*1.*

## *SEPARATEUR DE FAISCEAUX D'ONDES OPTIQUES.*

*La présente invention concerne les séparateurs de faisceaux et plus particulièrement d'ondes optiques en au moins deux faisceaux qui seront traités séparément pour toutes applications, comme par exemple la télé diffusion par câbles ou les communications téléphoniques.*

*Ainsi dans ces différents domaines mentionnés ci-dessus, les informations lumineuses sont véhiculées le long des câbles optiques constitués essentiellement par un ensemble de fibres optiques aboutées les unes aux autres pour pouvoir assurer la continuité des informations, qui se propagent sous forme d'impulsions lumineuses.*

*Il est bien évident que le long de ces câbles, il est nécessaire de prélever une partie de l'information véhiculée et en conséquence il est nécessaire d'intercaler à chaque point où l'on désire prélever cette information, un dispositif optique que les techniciens dénomment "séparateur".*

*Il existe déjà dans l'art antérieur, un ensemble de réalisation de séparateurs qui font intervenir différents phénomènes physiques et qui conduisent à des réalisations compliquées entraînant de ce fait une perte d'énergie véhiculée sous forme d'impulsions lumineuses dans le câble.*

*De plus pour réaliser des câbles d'une longueur relativement importante, il est nécessaire d'abouter plusieurs fibres optiques les unes aux autres. Ceci s'effectue avec des connecteurs optiques.*

*En conséquence l'ensemble des séparateurs et connecteurs optiques se trouvant sur un câble font que l'atténuation de la puissance optique transportée par le câble n'est pas négligeable et de plus tout l'ensemble des moyens de connectique et de séparation de faisceaux en font des câbles relativement onéreux.*

*La présente invention a pour but de pallier ces inconvénients et de réaliser un séparateur de faisceaux d'ondes optiques d'une*

conception qui lui permette de constituer à la fois un séparateur optique et aussi éventuellement un connecteur.

Plus précisément, la présente invention a pour objet un séparateur de faisceaux d'ondes optiques, caractérisé par le fait qu'il comporte

- un premier guide d'ondes optiques réalisé en un premier matériau d'indice optique "n1" délimité par au moins une face d'entrée desdites ondes optiques, et une surface entourant au moins partiellement ledit axe de propagation desdites ondes dans ledit guide, ladite surface étant délimitée d'un côté par les bords de ladite face d'entrée,

- un second guide d'ondes optiques réalisé en un second matériau d'indice optique "n2", ledit indice optique "n2" ayant une valeur au moins égale à la valeur de l'indice "n1", ledit second guide d'ondes ayant une face d'entrée située sur au moins une partie de la surface latérale dudit premier guide d'ondes située à proximité de ladite face d'entrée dudit premier guide d'ondes pour former un dioptre de séparation entre les deux dits premier et second matériaux.

D'autres caractéristiques et avantages de la présente invention apparaitront au cours de la description suivante, donnés en regard des dessins annexés à titre illustratif, mais nullement limitatif dans lesquels :

- la figure 1 représente un schéma de principe montrant la propagation de faisceaux lumineux dans ledit guide d'ondes comme par exemple une fibre optique,

- la figure 2 représente sous forme schématique un mode de réalisation d'un séparateur selon l'invention et,

- la figure 3 un second mode de réalisation d'un séparateur selon l'invention dans une application à un connecteur de fibres optiques.

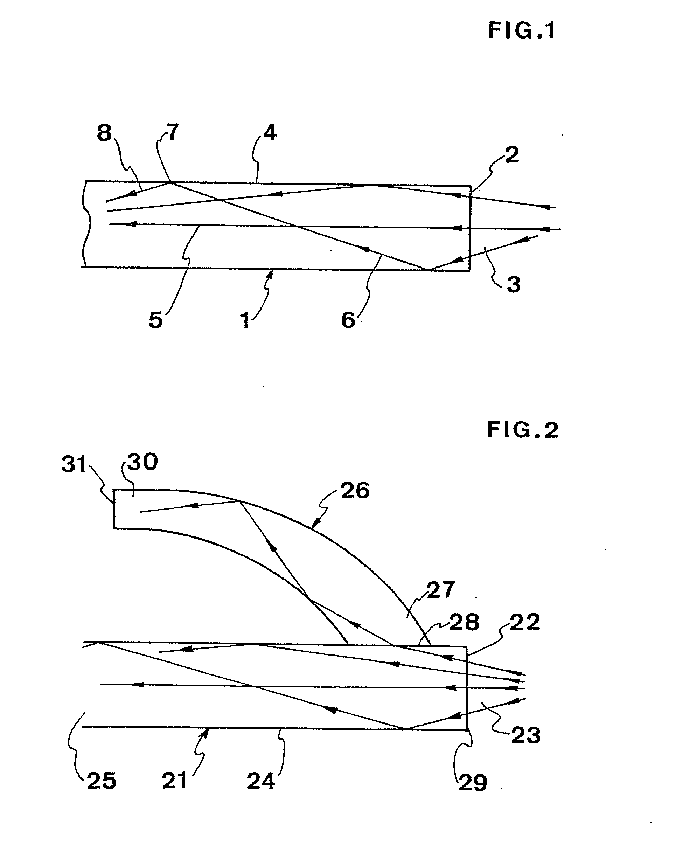

En revenant plus particulièrement à la figure 1, celle-ci illustre une extrémité de fibre optique 1 délimitée à une extrémité par une face d'entrée 2, généralement plane par laquelle est apte à pénétrer un faisceau lumineux incident 3.

Cette fibre optique est réalisée en un matériau d'indice optique "nl" et se présente généralement sous la forme d'un cylindre dont la surface extérieure 4 forme un dioptre de séparation entre le milieu d'indice "nl" et le milieu extérieur d'indice "no".

On constate que lorsque le faisceau 3 pénètre par la face d'entrée 2 sous différents angles d'incidence, il se propage souvent à l'intérieur du milieu d'indice "nl" en suivant différents trajets en ligne brisée essentiellement sur son extrémité proche de la face d'entrée.

C'est ainsi que certains faisceaux 6 se réfléchissent sur le dioptre de séparation avec le milieu dans lequel se trouve cette fibre qui est généralement un milieu optique en subissant une réflexion totale, par exemple au point 7 pour continuer à se propager en 8 dans la fibre optique.

Ce phénomène est bien connu et est essentiellement dû, au fait que les angles d'incidence des faisceaux, comme 6, tombant sur un dioptre de séparation 4 sont relativement importants et que de plus le milieu d'indice "no" est inférieur au milieu d'indice "nl".

De ce fait l'angle d'incidence est généralement supérieur à l'angle de réflexion totale.

Utilisant le principe mentionné ci-dessus, la présente invention se propose de réaliser un séparateur de faisceaux d'ondes optiques se propageant dans la fibre 1 comme il sera décrit, notamment en regard de la figure 2.

La figure 2 représente sous forme schématique un mode de réalisasation d'un séparateur de faisceaux optiques en au moins deux faisceaux secondaires. Ce séparateur comprend un premier guide d'ondes 21 réalisé en un matériau d'indice "nl" comme par exemple du verre. Ce guide d'ondes comporte une face d'entrée 22 apte à recevoir un faisceau lumineux incident 23 et une surface latérale 24 entourant l'axe optique 25 de propagation des faisceaux d'ondes dans le guide 21.

Le séparateur comporte en outre un second guide d'ondes de faisceaux optiques 26 réalisé en un matériau d'indice "n2" dont une extrémité 27 est située en contact sur une partie 28 de la surface latérale 24 du guide d'ondes 21. Cette partie 28 est de préférence située à proximité de la face d'entrée 22 dont les bords 29 délimitent d'un côté la surface latérale 24.

L'autre extrémité 30 du second guide d'ondes 26 comporte des moyens de sorties 31 tels que par exemple une face plane apte à être couplée avec différents éléments non représentés, mais qui généralement seront des systèmes par exemple photo-sensibles. Le séparateur représenté sur la figure 2 permet ainsi, lorsque le faisceau 23 pénètre dans le premier guide d'ondes 21, de séparer une partie plus ou moins important du faisceau se propageant à l'intérieur du guide d'ondes 21 pour le voir émerger, notamment par la face de sortie 31.

En effet, le milieu d'indice "n2" est choisi pour que sa valeur soit au moins égale et même, avantageusement, supérieure à la valeur de l'indice "n1" du guide d'ondes 21.

En conséquence la partie 28, séparant le matériau du guide d'ondes 21 du matériau du guide d'ondes 26, constitue un dioptre de séparation d'un premier milieu d'indice "n1" à un second milieu d'indice "n2" (supérieur à "n1").

De ce fait, tous les rayons lumineux qui tomberont sous l'incidence non rasante sur le dioptre 28, pénètrent à l'intérieur du guide 26, puisque le rapport n2/n1 est au moins égal à 1 sinon supérieur et de ce fait il y a toujours des faisceaux passant du guide d'ondes 21 vers le guide d'ondes 26 en se réfractant si "n2" est supérieur à "n1" ou en se propageant rectilignement si "n2" est égal à "n1".

Pour obtenir une division du faisceau 23 pénétrant dans le premier guide d'ondes 21 d'une certaine quantité voulue, il suffit pour cela de définir, notamment expérimentalement, la valeur de la surface de séparation du dioptre 28, ainsi que sa position par rapport à la face d'entrée 22.

Cette structure de séparateur optique qui vient d'être décrite est avantageuse, car elle est peu compliquée. Mais en plus elle permet que ce séparateur soit intégré dans un connecteur de deux fibres optiques.

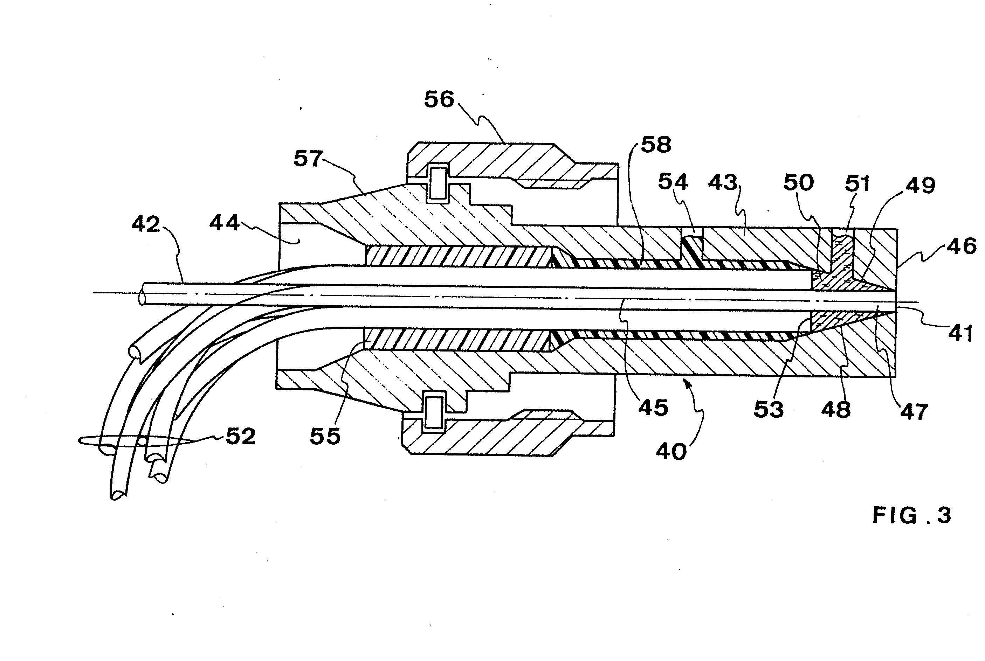

La figure 3 montre un tel mode de réalisation qui permet de réaliser une fonction de séparateur en même temps qu'une fonction de connexion de deux fibres optiques.

Le dispositif illustré sur la figure 3 représente un moyen de connexion 40 aval pour un faisceau entrant par la face 41 d'une fibre optique 42.

Le dispositif de connexion 40 comprend schématiquement un corps d'embase 43 comportant une percée longitudinale 44 dans laquelle est disposée suivant son axe central 45, une fibre optique dite principale 42 dont l'extrémité 41 est coplanaire avec la face d'extrémité 46 de l'embase 43. L'extrémité 47 de la fibre optique, située à proximité de la face 46 est entourée entre sa surface extérieure 48 et la face intérieure de l'extrémité de la percée axiale 44 d'un milieu optique 50 d'indice optique supérieur à l'indice optique du matériau dans lequel est réalisée la fibre optique 42, ce milieu 50 étant en contact de la surface latérale 48.

Ce matériau 50 peut être constitué par une résine durcissable qui est introduite sous forme liquide par un orifice 51 réalisé transversalement dans l'extrémité du corps d'embase 40 et débouchant au niveau de l'extrémité 47 de la fibre 42. De ce fait, ce matériau 50 en durcissant permet le maintien de l'extrémité de cette fibre et constitue un deuxième guide d'ondes, tel qu'il a été défini en regard de la figure 2, dont le dioptre de séparation avec la fibre constituant le premier guide d'ondes, est constitué par une portion de surface cylindrique définie entre l'extrémité 47 de la fibre 42 et la surface du matériau 50 entourant cette fibre.

Ce matériau durcissable est limité dans un plan perpendiculaire à l'axe 45 par les extrémités 53 d'un ensemble d'une pluralité de fibres optiques dites secondaires 52 réparties de façon uniforme à la périphérie de la fibre 42. Leurs extrémités 53 sont situées en retrait par rapport à l'extrémité 41, pour laisser une certaine épaisseur longitudinale suivant l'axe 45 au matériau 50.

De ce fait ce matériau durcissable 50 est en fait comme illustré, un cône percé défini par la surface latérale de l'extrémité 47 de la fibre optique la surface intérieure 49, de la percée 44 et l'ensemble des extrémités 53 des fibres optiques secondaires 52 situées à la périphérie de la fibre optique principale 42.

Avantageusement, pour maintenir solidairement, ensemble, les fibres optiques secondaires 52 et la fibre optique principale 42 avec le corps d'embase 40, un matériau de moulage durcissable 58 est introduit par l'orifice 54 pour noyer cet ensemble de fibres et solidariser celui-ci avec le corps d'embase 40.

Un manchon de protection 55 réalisé en matériau souple fixé à l'extrémité 57 de la percée 44 permet de rassembler en un même faisceau, les fibres 52 et leur permettre de se dissocier de la fibre principale 42.

Enfin, de façon classique, cette embase 40 comporte des moyens de connexion 56 qui permettent le couplage à un autre connecteur amont.

La structure du connecteur-séparateur qui vient d'être décrit en regard de la figure 3 correspond bien à un séparateur selon l'invention comprenant un premier guide d'ondes constitué en l'occurrence par la fibre 42 et un deuxième guide d'ondes situé à proximité de la face d'entrée 41 de la fibre 42, constituée essentiellement par le matériau 50 d'indice avantageusement supérieur à celui du matériau dans lequel est réalisée la fibre 42. L'ensemble de faisceaux des fibres 52 permettant de récupérer la partie du faisceau dévié, notamment au niveau du dioptre 48.

## REVENDICATIONS

1) - *Séparateur de faisceaux d'ondes optiques, caractérisé par le fait qu'il comporte :*

*- un premier guide d'ondes optiques (21, 42) réalisé en un premier matériau d'indice optique "n1" délimité par au moins une face d'entrée (29, 41) desdites ondes optiques, et une surface entourant au moins partiellement ledit axe de propagation desdites ondes dans ledit guide, la dite surface étant délimitée d'un côté par les bords de ladite face d'entrée,*

*- un second guide d'ondes optiques (26, 50) réalisé en un second matériau d'indice optique "n2" ledit indice optique "n2" ayant une valeur au moins égale à la valeur de l'indice "n1" ledit second guide d'ondes ayant une face d'entrée située sur au moins une partie (28, 53) de la surface latérale dudit premier guide d'ondes située à proximité de ladite face d'entrée dudit premier guide d'ondes pour former un dioptre de séparation entre les deux dits premier et second matériaux.*

2) - *Séparateur selon la revendication 1, caractérisé par le fait que ledit premier guide d'ondes est constitué par une fibre optique principale (42) ledit second guide d'ondes est constitué par un matériau (50) entourant l'extrémité de ladite fibre (42) en forme de cône traversé par ladite fibre, et une pluralité de fibres secondaires (52) disposées autour de ladite fibre principale (42) de façon que leurs extrémités soient au contact dudit matériau (50) semblablement à la périphérie dudit cône.*

3) - *Séparateur selon la revendication 2, caractérisé par le fait que l'ensemble des dites fibres principale et secondaires sont situées dans une percée axiale (44) d'un corps d'embase, la face d'extrémité (41) de ladite fibre (42) étant coplanaire avec la face d'extrémité dudit corps d'embase (43)*

4) - *Séparateur selon la revendication 3 caractérisé par le fait qu'au moins une partie desdites fibres principale et secondaires*

sont noyées dans un matériau de moulage (58) sur au moins une partie de ladite percée axiale (44)

5) - Séparateur selon la revendication 4, caractérisé par le fait qu'il comporte un manchon (55) en un matériau souple entourant lesdites fibres principale et secondaires, ledit manchon étant situé à l'extrémité opposée dudit corps d'embase (43), de laquelle émerge la face d'extrémité (41) de ladite fibre principale (42).

## FIG.1

## FIG.2

FIG . 3

Office européen
des brevets

**RAPPORT DE RECHERCHE EUROPEENNE**

**0120764**
Numéro de la demande

EP 84 40 0516

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | PATENTS ABSTRACTS OF JAPAN, vol. 3, no. 1, 11 janvier 1979, page 94E82; & JP - A - 53 127 751 (OKI DENKI KOGYO K.K.) 08-11-1978 * Abrégé * | 1 | G 02 B 7/26 |
| A | PATENTS ABSTRACTS OF JAPAN, vol. 3, no. 132(E-149), 6 novembre 1979, page 131E149; & JP - A - 54 111 363 (MATSUSHITA DENKI SANGYO K.K.) 31-08-1979 * Abrégé * | 1 | |

DOMAINES TECHNIQUES RECHERCHES (Int. Cl. ³)

G 02 B

Le présent rapport de recherche a été établi pour toutes les revendications

| Lieu de la recherche | Date d'achèvement de la recherche | Examinateur |
|---|---|---|
| LA HAYE | 02-07-1984 | MORRELL D.M. |